# EUROPEAN PATENT APPLICATION

(11) **EP 2 754 694 A1**
(43) Date of publication of application: **16.07.2014**
(21) Application number: 12854990.4
(22) Date of filing: 12.10.2012
(51) Int. Cl.: C08L 75/04, C08G 18/00, C08K 5/053, C09D 5/02, C09D 7/12, C09D 175/04

(54) **FILM-FORMING AID, AQUEOUS RESIN COMPOSITION AND STEEL SHEET SURFACE TREATMENT AGENT CONTAINING SAME**

(30) Priority: 09.12.2011 JP 2011270078
(71) Applicant: DIC Corporation, Tokyo 174-8520 (JP)
(72) Inventor: KATAKAMI Yasuyuki, Takaishi-shi Osaka 592-0001 (JP)
(74) Representative: Albrecht, Thomas
(86) International application number: PCT/JP2012/076470
(87) International publication number: WO 2013/084590

(57) **Abstract**

A problem to be solved by the present invention is to provide a film-forming aid having low toxicity and film-forming performance equivalent to N-methyl-2-pyrrolidone and also provide an aqueous resin composition and a steel sheet surface treatment agent each containing the film-forming aid. The present invention relates to a film-forming aid including at least one selected from the group consisting of 1,3-butanediol (A1) and 1,2-butanediol (2-1), and relates to an aqueous resin composition and a steel sheet surface treatment agent each containing the film-forming aid.

## Description

### Technical Field

The present invention relates to a film-forming aid capable of imparting an excellent film-forming property to aqueous resin compositions which can be used for, for example, coating agents, adhesives, and the like, and also relates to an aqueous resin composition containing the film-forming aid.

### Background Art

In recent years, demand for coating agents for protecting surfaces of metallic substrates such as steel sheets has increased with increases in demand for metals. These coating agents are required to have, in addition to solvent resistance and the like, corrosion resistance at a level which can prevent peeling and swelling of coating films due to Corrosion of metallic substrates, and chemical resistance at a level which can prevent dissolution and peeling of coating films even when acid or alkali chemicals are attached. In particular, in the steel industry in which surfaces of coating films formed on surfaces of metallic substrates are often washed with alkaline cleaners or the like, the chemical resistance is an important characteristic for preventing peeling and dissolution of the coating films, and deterioration in the metallic substrates, and the like due to the influences of the cleaners.

In order to form coating films having excellent chemical resistance, it is important to improve the film forming property. A method known as a method for improving the film forming property and forming a uniform coating film with no defect in the coating film includes, for example, applying a coating material to a surface of a substrate and then drying the coating film at a high temperature of about 200°C to 250°C.

However, in the recent steel industry, from the viewpoint of improving production efficiency of metallic materials, the temperature for drying after a coating agent is applied to a surface of a metallic substrate is determine to a low temperature of about 80°C, and the drying step tends to be carried out within a short time. Such a temperature has the problem of easily causing coating film defects and the like because of difficultly in practically satisfactorily forming films (leveling) of the coating agent.

On the other hand, aqueous urethane resins used for the coating agents and the like often contain a large amount of urethane bond and urea bond from the viewpoint of imparting high hardness to the formed coating films. The coating agents containing a large amount of urethane bond and urea bond may not satisfactorily form films even though the high-temperature drying step, and thus the film-forming property is often improved by using a film-forming aid in combination with the urethane resins or the like.

As the film-forming aid, N-methyl-2-pyrrolidone is generally known and has been frequently used because the excellent film forming property can be imparted to synthetic resins.

However, in the industrial field in which the toxicity of the N-methyl-2-pyrrolidane is perceived as a problem, there is demand for development of a nontoxic film-forming aid capable of imparting film-forming performance equivalent to that of the N-methyl-2-pyrrolidone.

Examples of a film-forming aid studied as an alternative to the N-methyl-2-pyrrolidone include dipropylene glycol dimethyl ether, diacetone alcohol, ethylene glycol monobutyl ether, and the like (refer to, for example, Patent Literatures 1 to 3).

The above-described film-forming aids have low toxicity or no toxicity as compared with N-methyl-2-pyrrolidone, but have the problem of being significantly poor in film-forming performance. In particular, it is difficult to impart the film-forming property to urethane resins which can form coating films with high hardness, and thus solvent resistance, corrosion resistance, and chemical resistance of coating films may be still degraded.

### Citation List

### Patent Literature

PTL 1: Japanese Unexamined Patent Application Publication No. 2006-307078
PTL 2: Japanese Unexamined Patent Application Publication No. 2005-306948
PTL 3: Japanese Unexamined Patent Application Publication (Translation of PCT Application) No. 2011-512445

### Summary of Invention

### Technical Problem

A problem to be solved by the present invention is to provide a film-forming aid having film-forming performance equivalent to N-methyl-2-pyrrolidone and low toxicity.

Also, a problem to be solved by the present invention is to provide an aqueous resin composition containing a low-toxicity film-forming aid and being capable of imparting excellent film-forming performance to, for example, urethane resins and composite resins each composed of a urethane resin and a vinyl resin, thereby forming coating films having excellent solvent resistance, corrosion resistance, and chemical resistance.

### Solution to Problem

As a result of repeated intensive researches, the inventors found that when a no- or low-toxicity specified diol generally known as a raw material for producing urethane resins, polyester resins, and the like is used as a film-forming aid, an excellent film-forming ability can be imparted to various aqueous resin compositions.

In particular, it was found that the film-forming aid can impart excellent film-forming performance to urethane resins and composite resins having a large amount of a urethane bond and a urea bond, and consequently can form coating films having excellent solvent resistance, configuration, and chemical resistance.

That is, the present invention relates to a film-forming aid containing at least one selected from the group consisting of 1,3-butanediol (A1) and 1,2-butanediol (2-1).

Also, the present invention relates to an aqueous resin composition containing the film-forming aid, a resin (B), and an aqueous medium (C).

### Advantageous Effects of Invention

A film-forming aid of the present invention has low toxicity as compared with N-methyl-2-pyrrolidone and, at the same time, can impart a film-forming property at a level equivalent to the N-methyl-2-pyrrolidone to aqueous resin compositions.

Also, an aqueous resin composition of the present invention containing the film-forming aid can be used for various applications, for example, a steel sheet surface treatment agent, a coating agent for surfaces of a plastic substrate or glass substrate, an adhesive, etc. Also, even at a low coating drying temperature, coating films with no defects and very excellent solvent resistance, chemical resistance, corrosion resistance, etc. can be formed.

Specifically, the aqueous resin composition of the present invention can be suitably used for, for example, plastic substrates of acrylonitrile-butadiene-styrene resins (ABS resins), polycarbonate resins (PC resins), ABS/PC resins, polystyrene resins (PS resins), polymethyl methacrylate resins (PMMA resins), and the like, and thus can be used for coating agents and adhesives used for producing cellular phones, home electric appliances, OA apparatuses, automotive interior materials, etc.

Also, the aqueous resin composition of the present invention can form coating films excellent in corrosion resistance and capable of preventing the occurrence of rust and the like on plated steel sheets such as a galvanized steel sheet, an aluminum-zinc alloy steel sheet, and the like, and metallic substrates such as an aluminum sheet, an aluminum alloy sheet, a magnetic steel sheet, a copper sheet, a stainless steel sheet, and the like, and thus can be used for, for example, surface coating of building members such as an external wall, a roof, and the like, civil engineering members such as a guard rail, a sound-proof wall, a drainage, and the like, home electric appliances, industrial machines, automotive components, etc.

### Description of Embodiments

A film-forming aid of the present invention contains at least one selected from the group consisting of 1,3-butanediol (A1) and 1,2-butanediol (2-1), and, if required, a component such as another diol or the like.

For example, when the film-forming aid contains 1,3-butanediol (A1), the film-forming aid can be suitably used as a film-forming aid because it has a relatively high boiling point due to interaction between hydroxyl groups in spite of having a low molecular weight. Also, the film-forming aid has a lower molecular weight than diethylene glycol alkyl ether, dipropylene glycol diallyl ether, and the like which are generally known as film-forming aids, and thus has a large amount of hydroxyl groups per unit mass, and it is considered that the hydroxyl groups inhibit formation of hydrogen bonds between urethane bonds and urea bonds present in a resin (B) described below, thereby permitting improvement in the film-forming property of an aqueous resin composition.

The film-forming aid containing at least one selected from the group consisting of 1,3-butanediol (A1) and 1,2-butanediol (2-1) can impart the excellent film-forming property to various aqueous resin compositions.

On the other hand, 1,4-butanediol and ethylene glycol which have structures similar to the above-described diols have the problem of the possibility of having toxicity and thus may not be used as an alternative to N-methyl-2-pyrrolidone. Also, pentanediol and hexanediol have no problem of toxicity, but in some cases, the satisfactory film-forming property cannot be imparted to an aqueous resin composition. Also, the pentanediol and hexanediol easily remain in dry coating films, and consequently, solvent resistance, chemical resistance, and water resistance of the coating films may be degraded. Further, use of 1,3-propanediol alone as a film-forming aid tends to slightly degrade water resistance of coating films.

The film-forming aid containing 1,3-butanediol (A1) as an essential component in combination with at least one diol (A2) selected from the group consisting of 1,2-butanediol (2-1), 1,3-propanediol (2-2), and 1,2-propanediol (2-3) is preferably used for further improving the film-forming property and forming coating films having more excellent solvent resistance, chemical resistance, corrosion resistance, and water resistance.

Therefore, the excellent film-forming property can be imparted to an aqueous resin composition, the film-forming aid little remains in a coating film formed by using the aqueous resin composition, and a coating film having excellent solvent resistance, chemical resistance, and corrosion resistance can be formed.

The film-forming aid containing 1,3-butanediol (A1) in combination with 1,2-propanediol (2-2) is preferably used because more excellent film-forming performance can be imparted to a urethane resin and a composite resin having a large amount of urethane bond and urea bond.

When combination of the 1,3-butanediol (A1) and the diol (A2) is used as the film-forming aid, the mass ratio [the diol (A2)/the 1,3-butanediol (A1)] is preferably within a range of 0.1 to 3 and more preferably within a range of 0.2 to 2 in order to further improve the film-forming property and consequently form a coating film having excellent solvent resistance, chemical resistance, and corrosion resistance.

Next, an aqueous resin composition containing the film-forming aid is described.

An aqueous resin composition of the present invention contains the film-forming aid, the resin (B), and an aqueous medium (C), and if required, other additives.

The aqueous resin composition of the present invention contains the film-forming aid and thus has the excellent film-forming property and consequently can form a coating film having excellent solvent resistance, chemical resistance, and corrosion resistance.

The aqueous resin composition of the present invention has a form in which the film-forming aid and the resin (B) are dissolved or dispersed in the aqueous medium (C). Also, the aqueous resin composition has a form in which the film-forming aid is present in the aqueous medium (C) in a state of being partially or entirely included in particles of the resin (B).

The aqueous resin composition preferably has a nonvolatile content of 10% by mass to 60% by mass. The nonvolatile content represents a ratio of the mass of the aqueous resin composition after drying to the mass of the aqueous resin composition before drying when the aqueous resin composition is dried by being allowed to stand in an environment of 140°C for 90 minutes.

The film-forming aid can be preferably used within a range of 1% by mss to 30% by mass, more preferably 2% by mass to 15% by mass, and still more preferably 2% by mass to 10% by mass relative to the total amount of the aqueous resin composition at a mass ratio [film-forming aid/aqueous medium (C)] of the film-forming aid to the aqueous medium (C) described below within a range of 0.01 to 1, more preferably 0.02 to 0.3, and still more preferably 0.02 to 0.2.

In addition, the resin (B) is preferably contained within a range of 10% by mass to 60% by mass and more preferably 20% by mass to 45% by mass relative to the total amount of the aqueous resin composition.

Various resins can be used as the resin (B) in the aqueous resin composition. In particular, a urethane resin (b1) and a composite resin (b2) including a urethane resin and a vinyl resin, which are suitably used for a coating agent and an adhesive, are preferably used alone or in combination, for example, in order to impart followability and adhesion to a substrate, and the like.

The film-forming property of the resin (B) may not be sufficiently improved even by using a general film-forming aid due to the presence of a urethane bond and a urea bond in the resin (B). By using the film-forming aid of the present invention, the excellent film-forming property can be imparted to the resin (B) without imparting toxicity. The "total amount of a urethane bond and a urea bond" represents a value obtained by dividing the amount of substance of isocyanate groups in polyisocyanate used for producing the resin (B) by the total mass of polyisocyanate, polyol, and a chain extender which can be used for producing the resin (B).

For example, when the urethane resin (b1) is used as the resin (B), the urethane resin (b1) containing a urethane bond and a urea bond in a total within a range of 1.2 mmol/g to 5 mmol/g relative to the total amount of the urethane resin (b1) can also be used. In particular, from the viewpoint of enhancing hardness of the formed coating film and satisfying both the excellent film-forming property and low toxicity, the resin (B) containing a urethane bond and a urea bond in a total within a range of 2 mmol/g to 4 mmol/g is preferably used.

On the other hand, when the composite resin (b2) composed of a urethane resin and a vinyl resin is used as the resin (B), the composite resin (b2) containing a urethane bond and a urea bond in a total within a range of 1.2 mmol/g to 5 mmol/g relative to the total amount of the urethane resin constituting the composite resin (b2) can be used. In particular, from the viewpoint of enhancing hardness of the formed coating film and satisfying both the excellent film-forming property and low toxicity, the resin (B) containing a urethane bond and a urea bond in a total within a range of 2 mmol/g to 4 mmol/g is preferably used. The urethane resin constituting the composite resin (b2) refers to a structure formed by polyol and polyisocyanate, which constitute the urethane resin, and a chain extender used according to demand. The "total amount of a urethane bond and a urea bond" contained in the composite resin (b2) represents a value obtained by dividing the amount of substance of isocyanate groups in polyisocyanate used for producing the composite resin (b2) by the total mass of the polyisocyanate, polyol, and chain extender which are used for producing the composite resin (b2).

In addition, the resin (B) preferably has a hydrophilic group in order to stably disperse the resin (B) in the aqueous medium (C).

Examples of the hydrophilic group include ionic groups such as anionic groups, cationic groups, and the like, and nonionic groups. Among these, the ionic groups are preferably used for imparting good water dispersion stability.

Examples of the anionic groups among the ionic groups include a carboxyl group, a sulfonic acid group, a carboxylate group and a sulfonate group formed by neutralizing a carboxyl group and a sulfonic acid group, a sulfate ester group, a phosphonate group, a phosphoric monoester group, a phosphoric diester group, a phosphorous monoester group, a phosphorous diester groups, and the like, and a carboxyl group or a carboxylate group formed by neutralizing a carboxyl group is preferred.

Examples of the cationic groups among the ionic groups include a quaternary ammonium base, a tertiary amino group, a secondary amino group, a primary amino group, and the like, and a quaternary ammonium base and a tertiary amino group are preferred in view of easy introduction.

The tertiary amino group may be present in a main chain constituting the resin (B), but in order to form an aqueous resin composition having the excellent film-forming property, it may be present in a side chain as represented by general formula [I] below.

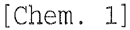

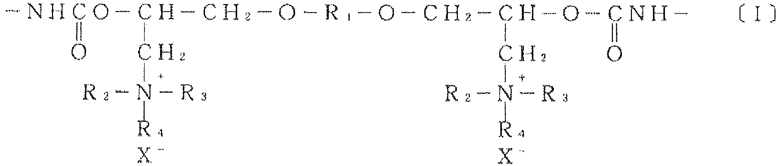

[In the formula, R₁ represents an alkylene group, a dihydric phenol residue, or a polyoxyalkylene group, R₂ and R₃ each independently represent an alkyl group which may contain an alicyclic structure, R₄ represents a hydrogen atom or a quaternizing agent residue introduced by quaternization reaction, and X⁻ represents an anionic counter ion.]

Among the hydrophilic groups, the anionic group or cationic group is preferably present within a range of 10 mmol/kg to 2,000 mmol/kg and particularly preferably within a range of 10 mmol/kg to 700 mmol/kg relative to the resin (B).

From the viewpoint of forming a coating film having the excellent film-forming property and excellent solvent resistance and chemical resistance, the resin (B) having a weight-average molecular weight within a range of 5,000 to 500,000 is preferably used.

The urethane resin (b1) produced by reacting polyol with polyisocyanate and, if required, a chain extender can be used as the resin (B).

Specifically, the urethane resin (b1) can be produced by reacting polyol with polyisocyanate in the presence of no solvent or an organic solvent different from the film-forming aid to produce a urethane prepolymer as a precursor (b1'); if required, partially or entirely neutralizing the hydrophilic groups of the prepolymer and mixing the prepolymer with the aqueous medium (C); if require, performing elongation reaction, and then dispersing the product in water.

As the polyol usable for producing the urethane resin (b1), for example, polyol having the hydrophilic group can be used, if required, in combination with another polyol.

Usable examples of the polyol having the hydrophilic group include polyol having an anionic group and polyol having a cationic group.

Usable examples of the polyol having an anionic group include polyol having a carboxyl group, polyol having a sulfonic acid group, and the like.

Usable examples of the polyol having a carboxyl group include 2,2-dimethylolpropionic acid, 2,2-dimethylolbutanoic acid, 2,2--dimethylolvaleric acid, and the like. Also, polyester polyol having a carboxyl group, which is produced by reacting the polyol having a carboxyl group with a polycarboxylic acid, can be used.

For example, polyester polyol having a sulfonic acid group, which is produced by reacting a dicarboxylic acid, such as 5-sulfoisophthalic acid, sulfoterephthalic acid, 4-sulfophthalic acid, 5[4-sulfophenoxy]isophthalic acid, or the like, a salt thereof, and the low-molecular-weight polyol can be used as the polyol having a sulfonic acid group.

The anionic groups are preferably partially or entirely neutralized with a basic compound or the like in order to exhibit good water dispersibility.

Examples of the basic compound which can be used for neutralizing the anionic groups include organic amines such as ammonia, triethylamine, morpholine, and the like, alkanolamines such as monoethanolamine, diethyl ethanolamine, and the like, metals such as sodium, potassium, and lithium, and the like.

From the viewpoint of improving water dispersion stability of the resultant aqueous resin composition, the basic compound is preferably used within a range of basic compound/anionic group = 0.5 to 3.0 (molar ratio) and more preferably 0.9 to 2.0 (molar ratio).

For example, polyol having a tertiary amino group can be used as the polyol having a cationic group.

Usable examples of the polyol having a tertiary amino group include N-alkyldialkanolamines such as N-methyldiethanolamine, N-butyl-diethanolamine, and the like.

Also, polyol produced by reacting a compound having two epoxy groups with a secondary amine can be used as the polyol having a tertiary amino group. For example, polyol having a tertiary amino group, which is produced by reacting a compound having two epoxy groups and represented by general formula [II] below with a secondary amine can be used.

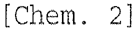

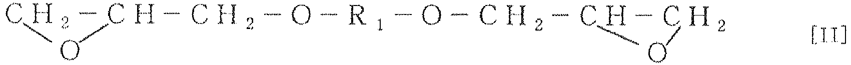

[In the formula, R₁ represents an alkylene group, a dihydric phenol residue, or a polyoxyalkylene group.]

The compound having two epoxy groups, represented by the general formula [II], and used for producing the polyol, having a tertiary amino group is, for example, a compound in which R₁ is an aliphatic alkyl chain such as ethylene, propylene, butane, pentene, or the like, an alkylene chain having an alicyclic structure, such as cyclohexene or the like, a residue of dihydric phenol such as bisphenol A or the like, or a polyoxyalkylene chain derived from polyethylene glycol, polypropylene glycol, or the like.

Specifically, diglycidyl ether of poloxyalkylene glycol in which R₁ in the general formula [II] is a polyoxyalkylene group, particularly, polyoxyethylene glycol-diglycidyl ether, polyoxypropylene glycol-diglycidyl ether, diglycidyl ether of ethylene oxide-propylene oxide copolymer, or the like, can be preferably used.

Usable examples of the secondary amine reactive with the compound having two epoxy groups include dimethylamine, diethylamine, di-n-propylamine, diisopropylamine, di-n-butylamine, di-tert-butylamine, di-sec-butylamine, di-n-pentylamine, di-n-peptylamine, di-n-octylamine, diisooctylamine, dinonylamine, diisononylamine, di-n-decylamine, di-n-undecylamine, di-n-dodecylamine, di-n-pentadecylamine, di-n-octadecylamine, di-n-nonadecylamine, di-n-eicosylamine, and the like.

The reaction of the compound having two epoxy groups with the secondary amine can be performed, without using a catalyst at room temperature or under heating, by mixing both compounds so that an amount of secondary amino group is 1 equivalent per equivalent of the epoxy groups possessed by the compound.

The cationic groups are preferably partially or entirely neutralized with an acid compound described below. Usable examples of the acid compound include organic acids such as formic acid, acetic cid, propionic acid, succinic acid, glutaric acid, butyric acid, lactic acid, malic acid, citric acid, tartaric acid, malonic acid, adipic acid, and the like, organic sulfonic acids such as sulfonic acid, paratoluenesulfonic acid, methanesulfonic acid, and the like, inorganic acids such as hydrochloric acid, sulfuric acid, nitric acid, orthophosphoric acid, polyphosphoric acid, polymetaphosphoric acid, orthophosphorous acid, boric acid, hydrofluoric acid, and the like. These acids can be used alone or in combination of two or more, and in particular, orthophosphoric acid or orthophosphorous acid is preferably used.

The acid compound is preferably used within a range of 0.1 equivalents to 3 equivalents and more preferably within a range of 0.3 equivalents to 2.0 equivalents per equivalent of the cationic groups.

In addition, among the cationic groups, the tertiary amino groups are preferably partially or entirely quaternized. Examples of a quaternizing agent which can be used for quaternizing the tertiary amino groups include dialkylsulfuric acids such as dimethylsulfuric acid, dimethylsulfuric acid, and the like; alkyl halides such as methyl chloride, ethyl chloride, benzyl chloride, methyl bromide, ethyl bromide, benzyl bromide, methyl iodide, ethyl iodide, benzyl iodide, and the like; methyl alkyl- or acryl-sulfonates such as methyl methanesulfonate, methyl paratoluenesulfonate, and the like; epoxies such as ethylene oxide, propylene oxide, butylene oxide, styrene oxide, epichlorohydrin, allyl glycidyl ether, butyl glycidyl ether, 2-ethylhexyl glycidyl ether, phenyl glycidyl ether, and the like. In particular, dimethylsulfuric acid is preferably used.

The quaternizing agent is preferably used within a range of 0.1 equivalents to 3 equivalents and more preferably within a range of 0.3 equivalents to 2 equivalents per equivalent of the tertiary amino groups.

The polyol having the hydrophilic group is used within a range of 3% by mass to 20% by mass relative to the whole of the polyols used for producing the urethane resin (b1).

Examples of the other polyol which can be used for producing the urethane resin (b1) include polyester polyol, polyether polyol, polycarbonate polyol, polyacetal polyol, polyacrylate polyol, polyester amide polyol, polythioether polyol, and polyolefin polyol such as polybutadiene polyol and the like.

Usable examples of the polyester polyol include polyester produced by esterification reaction of low-molecular-weight polyol and polycarboxylic acid, polyester produced by ring-opening polymerization reaction of a cyclic ester compound such as ε-caprolactone or the like, copolymerized polyester of these polyesters, and the like.

Examples of the low-molecular-weight polyol include diols such as ethylene glycol, 1,2-propanediol, 1,3-propanediol, 1,3-butanediol, 1,4-butanediol, 1,5-pentanediol, 1,6-hexanediol, neopentyl glycol, 1,8-octanediol, diethylene glycol, triethylene glycol, tetraethylene glycol, polyethylene glycol, dipropylene glycol, tripropylene glycol, polytetramethylene glycol, bishydroxyethoxybenzene, bisphenol A, hydroquinone, alkylene oxide adducts thereof, and the like; triols such as glycerin, trimethylolpropane, and the like; and polyols each having an alicyclic structure, such as cyclobutanediol, cyclopentanediol, cyclohexanediol, cycloheptanediol, cyclooctanediol, cyclohexanedimethanol, hydroxypropylcyclohexanol, tricyclo[5,2,1,0,2,6]decane-dimethanol, bicyclo[4,3,0]-nonanediol, dicyclohexanediol, tri-cyclo[5,3,1,1]dodecanediol, bicyclo[4,3,0]nonanedimethanol, tricyclo[5,3,1,1]dodecane-diethanol, hydroxypropyltricyclo[5,3,1,1]dodecanol, spiro[3,4]octanediol, butylcyclohexanediol, 1,1'-bicyclohexylidenediol, cyclohexanetriol, hydrogenated bisphenol A, 1,3-adamantanediol, and the like. These can be used alone or in combination of two or more.

Usable examples of the polycarboxylic acid include succinic acid, adipic acid, azelaic acid, sebacic acid, dodecanedicarboxylic acid, maleic acid, fumaric acid, 1,3-cyclopentanedicarboxylic acid, 1,3-cyclohexanedicarboxylic acid, 1,4-cyclohexanedicarboxylic acid, terephthalic acid, isophthalic acid, phthalic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, anhydrides or ester-forming derivatives thereof, and the like.

The polyether polyol which can be used is produced by, for example, addition polymerization of alkylene oxide, such as ethylene oxide, propylene oxide, or the like, using as an initiator at least one compound having two or more active hydrogen atoms, such as ethylene glycol, diethylene glycol, or the like.

Usable examples of the initiator include ethylene glycol, diethylene glycol, triethylene glycol, trimethylene glycol, 1,2-propanediol, 1,3-propanediol, 1,3-butanediol, 1,4-butanediol, 1,6-hexanediol, neopentyl glycol, glycerin, trimethylolethane, trimethylolpropane, sorbitol, sucrose, aconitic sugar, trimellitic acid, hemimellitic acid, phosphoric acid, ethylenediamine, diethylenetriamine, triisopropanolamine, pyrogallol, dihydroxybenzoic acid, hydroxyphthalic acid, 1,2,3-propanetrithiol, and the like.

Usable examples of the alkylene oxide include ethylene oxide, propylene oxide, butylene oxide, styrene oxide, epichlorohydrin, tetrahydrofuran, cyclohexylene, and the like.

In addition, the polycarbonate polyol which can be used is produced by reacting diol, such as 1,4-butanediol, 1,5-pentanediol, 1,6-hexanediol, cyclohexanedimethanol, or the like, with a carbonic acid ester such as dimethyl carbonate, diethyl carbonate, ethylene carbonate, or the like, or phosgene.

From the viewpoint of forming a coating film having excellent heat-discoloration resistance, the polyester polyol or polycarbonate polyol is preferably used as the polyol. Also, the polyol having a number-average molecular weight of 300 to 10,000 and preferably 500 to 6,000 is preferably used.

Usable examples of the other polyol include glycols such as ethylene glycol, diethylene glycol, triethylene glycol, propylene glycol, 1,3-propanediol, 1,3-butanediol, 1,4-butanediol, hexamethylene glycol, hydrogenated bisphenol A, cyclohexanedimethanol, sucrose, methylene glycol, glycerin, trimethylolpropane, sorbitol, and the like; phenols such as bisphenol A, 4,4'-dihydroxydiphenyl, 4,4'-dihydroxydiphenyl ether, 4,4'-dihydroxydiphenyl sulfone, hydroquinone, and the like; and water.

Also, as the polyisocyanate used for producing the urethane resin (b1), aliphatic polyisocyanate, polyisocyanate having an alicyclic structure, aromatic polyisocyanate, and the like can be used alone or in combination of two or more.

Specific examples of the aliphatic polyisocyanate include hexamethylene diisocyanate, lysine diisocyanate methyl ester, xylylene diisocyanate, tetramethylxylylene diisocyanate, and the like, which can be used alone or in combination of two or more.

Specific examples of the polyisocyanate having an alicyclic structure include isophorone diisocyanate, bis(isocyanatomethyl)cyclohexane, dicyclohexylmethane diisocyanate, cyclohexane diisocyanate, methylcyclohexane diisocyanate, dicyclohexyldimethylmethane diisocyanate, 2,2'-dimethyldicyclohexylmethane diisocyanate, bis(4-isocyanato-n-butylidene)pentaerythritol, dimer acid diisocyanate, 2-isocyanatomethyl-3-(3--isocyanatopropyl)-5-isocyanatomethyl-bioyclo[2,2,1]-heptane, 2-asocyanatomethyl-3-(3-isocyanatopropyl)-6-isoCyanatomethyl-bicyclo[2,2,1]-heptane, 2-isocyanatomethyl-2-(3-isocyanatopropyl)-5-isocyanatomethyl-bicycio[2,2,1]-heptane, 2-isocyanatomethyl-2-(3-isocyanatopropyl)-6-isocyanatomethyl-bicyclo[2,2,1]-heptane, 2-isocyanatomethyl-3-(3-isocyanatopropyl)-6-(2-isocyanatoethyl)-bicyclo[2,2,1]-heptane, 2-isocyanatomethyl-3-(3-isocyanatapropyl)-6-(2-isocyanatoethyl)-bicyclo[2,1,1]-heptane, 2-isocyanatamethyl-2-(3-isocyanatopropyl)-5-(2-isocyanatoethyl)-bicycle[2,2,1]-heptane, 2-isocyanatomethyl-2-(3-isocyanatopropyl)-6-(2--isocyanatoethyl)-bicyclo[2,2,1]-heptane, norbornene diisocyanate, and the like, which can be used alone or in combination of two or more.

Among these, isophorone diisocyanate, dicyclohexylmethane diisocyanate, and norbornene diisocyanate are preferably used from the viewpoint of further improving solvent resistance, chemical resistance, corrosion resistance, and water resistance of a coating film formed by using the aqueous resin composition of the present invention.

The urethane resin produced by using the polyisocyanate having an alicyclic structure, such as isophorone diisocyanate or the like, has the excellent coating film properties as described above, but tends to be slightly decreased in the film-forming property.

However, even when the film-forming aid used in the present invention is used in combination with the urethane resin produced by using the polyisocyanate having an alicyclic structure, the film-forming property can be improved without deterioration in the above-described performance caused by the polyisocyanate having an alicyclic structure.

Specific examples of the aromatic polyisocyanate include phenylene diisocyanate, tolylene diisocyanate, diphenylmethane diisocyanate, naphthalene diisocyanate, and the like, which can be used alone or in combination of two or more.

In order to produce the aqueous resin composition capable of forming a coating film with high heat-discoloration resistance, the polyisocyanate is preferably used so that a total content of the aliphatic polyisocyanate and the polyisocyanate having an alicyclic structure is 10% by mass to 100% by mass relative to the polyisocyanate.

The reaction of the polyol with the polyisocyanate is preferably performed in such a manner that, for example, an equivalent ratio of isocyanate groups in the polyisocyanate to hydroxyl groups in the polyol is within a range of 1.05 to 3 and more preferably within a range of 1.05 to 2.

The reaction of the polyol with the polyisocyanate used for producing the urethane resin (b1) can be generally performed within a temperature range of 50°C to 150°C.

In producing the urethane resin (b1), if required, the chain extender such as polyamine, a hydrazine compound, another compound, or the like may be used for imparting physical properties such as various mechanical properties and heat properties, specifically, higher hardness and higher toughness of a coating film.

Usable examples of the polyamine include diamines such as ethylenediamine, 1,2-propane diamine, 1,6-hexamethylenediamine, piperazine, 2,5-dimethylpiperazine, isophorone diamine, 4,4'-dicyclohexylmethanediamine, 3,3'-dimethyl-4,4'-dicyclohexylmethanediamine, 1,4-cyclohexanediamine, and the like; diamines each having one primary amino group and one secondary amino group, such as N-hydroxymethyl aminoethylamine, N-hydroxyethyl aminoethylamine, N-hydroxypropyl aminopropylamine, N-ethyl aminoethylamine, N-methyl aminopropylamine, and the like; and polyamines such as diethylenetriamine, dipropylenetriamine, triethylenetetramine, and the like.

Usable examples of the hydrazine compound include hydrazine, N,N'-dimethylhydrazine, 1,6-hexamethylene bishydrazine, and the like.

Usable examples of the other compound used as the chain extender include dihydrazides such as succinic acid dihydrazide, adipic acid dihydrazide, glutaric acid dihydrazide, sebacic acid dihydrazide, isophthalic acid dihydrazide, and the like; and semicarbazides such as β-semicarbazide propionic acid hydrazide, 3-semicarbazide-propyl-carbazinic ester, semicarbazide-3-semicarbazide methyl-3,5,5-trimethylcyclohexane, and the like.

For example, when the polyamine is used as the chain extender, an equivalent ratio of amino groups to isocyanate groups possessed by urethane prepolymer (B') is within a range of 1.9 (equivalent ratio) or less and more preferably within a range of 0.3 to 1.0 (equivalent ratio). Use of the chain extender within the above-described range can impart physical properties such as mechanical properties and heat properties of the resultant coating film, specifically, higher hardness and higher toughness of the resultant coating film.

The urethane resin (b1) may have a carboxyl group or a carboxylate group, and a hydrolyzable silyl group or silanol group, and if required, another functional group. Examples of the functional group include an amino group, an imino group, a hydroxyl group, an epoxy group, and the like. When such a functional group is introduced, a cross-linking agent having a functional group reactive with the functional group is preferably combined for forming a coating film.

Next, the composite resin (b2) which can be used as the resin (B) is described.

A composite resin composed of a urethane resin and a vinyl resin can be used as the composite resin (b2).

The composite resin (b2) is a composite resin including a vinyl polymer which is partially or entirely present in urethane resin particles. The vinyl polymer is a polymer of a monomer having a polymerizable unsaturated double bond and refers to, for example, a polymer of a (meth)acrylic monomer or an olefin.

The urethane resin and the vinyl polymer preferably do not form a chemical bond, specifically, a covalent bond, in order to easily improve the film-forming property of the resultant aqueous resin composition. That is, it is preferred that in the composite resin (b2), the vinyl polymer is partially or entirely present in the urethane resin particles without partially forming covalent bonds with the urethane resin particles.

Also, the composite resin (b2) preferably includes a urethane resin and a vinyl resin at a mass ratio [urethane resin/vinyl resin] within a range of 0.1 to 10 and more preferably within a range of 0.1 to 2.

In order to improve solvent resistance and chemical resistance of a coating film, the composite resin (b2) used preferably includes a urethane resin having an anionic group as a hydrophilic group and a vinyl resin having an amino group, preferably a tertiary amino group.

The anionic group can be introduced in the urethane resin by, for example, using a compound having an acid group, such as 2,2-dimethylolpropionic acid or the like, for producing the urethane resin. Also, the amino group can be introduced in the vinyl resin by using a vinyl monomer having a (tertiary) amino group, such as dimethylaminoethyl (meth)acrylate or the like, for producing the vinyl resin. In the present invention, the term (meth)acrylate" represents one or both of acrylate and methacrylate.

The composite resin (b2) can be produced by, for example, methods below.

(Method 1) A method including a step (X2) of producing a urethane resin as a precursor (b2') of the composite resin (b2) in the presence of no solvent or an organic solvent, a step (Y2) of, if required, neutralizing and dispersing the precursor (b2') in an aqueous medium (C), a step (Z2) of, if required, performing elongation reaction of the precursor (b2'), adding a vinyl monomer in divided amounts or a total amount, and then polymerizing the vinyl monomer to produce the composite resin (b2).

During the reaction, a water dispersion of the composite resin (b2) can be produced by supplying, to a water dispersion of the urethane resin as the precursor (b2'), the vinyl monomer and a polymerization initiator separately or a mixture of them in a total amount or divided amounts, and polymerizing the vinyl monomer inside the urethane resin particles.

When the vinyl monomer is supplied, the water dispersion of the precursor (b2') preferably does not contain an emulsifier.

(Method 2) A method including a step (X3) of producing a urethane resin as a precursor (b2') of the composite resin (b2) by reacting polyol and polyisocyanate in the presence of a vinyl monomer, a step (Y3) of, if required, neutralizing and dispersing the precursor (b2') in an aqueous medium (C), a step (Z3) of, if required, performing elongation reaction of the precursor (b2'), if required, adding a vinyl monomer in divided amounts or a total amount, and then polymerizing the vinyl monomer to produce the composite resin (b2).

In the case of production by the method 2, the vinyl monomer used in the step (X3) of producing the urethane resin preferably does not contain a reactive functional group, particularly a functional group exhibiting reactivity with an isocyanate group. However, the vinyl monomer added after the step (Z3) of elongation reaction is not particularly limited.

Examples of the vinyl monomer include (meth)acrylic acid esters such as methyl (meth)acrylate, ethyl (meth)acrylate, n-butyl (meth)acrylate, i-butyl (meth)acrylate, tert-butyl (meth)acrylate, 2-ethylhexyl (meth)acrylate, cyclohexyl (meth)acrylate, dodecyl (meth)acrylate, stearyl (meth)acrylate, isobornyl (meth)acrylate, dicylcopentanyl (meth)acrylate, and the like; vinyl esters such as vinyl acetate and the like; vinyl ethers; unsaturated nitriles such (meth)acrylonitrile and the like; vinyl compounds having an aromatic ring, such as styrene, α-methylstyrene, divinylstyrene, and the like; butadiene; isoprene; N-vinylpyrrolidone; and the like; which can be used alone or as a mixture of two or more.

Among these, (mwth)acrylic acid ester monomers such as methyl (meth)acrylate, ethyl (meth)acrylate, n-butyl (meth)acrylate, i-butyl (meth)acrylate, tert-butyl (meth)acrylate, 2-ethylhexyl (meth)acrylate, cyclohexyl (meth)acrylate, isobornyl (meth)acrylate, and the like are preferably used as the vinyl monomer not having a reactive functional group. Such a vinyl monomer is preferably used within a range of 70% by mass to 100% by mass relative to the total amount of vinyl monomers used for producing the vinyl polymer because the resultant coating film has excellent solvent resistance, water resistance, chemical resistance, etc.

Also, a vinyl monomer having a reactive functional group can be used as the vinyl monomer, and examples thereof include polymerizable monomers having an epoxy group, such as glycidyl (meth)acrylate, allyl glycidyl ether, and the like; polymerizable monomers having a hydroxyl group, such as 2-hydroxyethyl (meth)acrylate, 2-hydroxypropyl (meth)acrylate, polyethylene glycol mono(meth)acrylate, and the like; polymerizable monomers having a carboxyl group, such as acrylic acid, methacrylic acid, itaconic acid, and the like; polymerizable monomers having an amide group, such as (meth)acrylamide, N-monoalkyl(meth)acrylamide, N,N-dialkyl(meth)acrylamide, and the like; polymerizable monomers having a carbonyl group, such as acrolein, diacetone (meth)acrylamide, and the like; polymerizable monomers having an acetoacetyl group, such as acetoacetoxyethyl (meth)acrylate and the like; polymerizable monomers having a methylolamide group or an alkoxylated group thereof, such as N-methylol (meth)acrylamide, N-butoxymethyl (meth)acrylamide, and the like; polymerizable monomers having an aziridinyl group; polymerizable monomers having an isocyanate group and/or a blocked isocyanate group; polymerizable monomers having an oxazoline group; vinyl monomers having a tertiary amino group, such as N,N-dimethylaminoethyl (meth)acrylate, N,N-diethylaminoethyl (meth)acrylate, N,N-dimethylaminopropyl (meth)acrylate, N,N-diethylaminopropyl (meth)acrylate, 4-[N,N-dimethylamino] styrene, 4-[N,N-diethylamino]styrene, 2-vinylpyridine, 4-vinylpyridine, and the like; which can be used alone or as a mixture of two or more.

The vinyl monomer having a reactive functional group is preferably used within a range of 0.1% by mass to 30% by mass relative to the total amount of vinyl monomers used for producing the vinyl polymer.

Examples of the polymerization initiator which can be used for producing the vinyl polymer include radical polymerization initiators such as persulfates, organic peroxides, hydrogen peroxide, and the like; and azo initiators such as 4,4'-azobis(4-cyanovaleric acid), 2,2'-azobis(2-amidinopropane) dihydrochloride, and the like. The radical polymerization initiator may be also used as a redox polymerization initiator in combination with a reducing agent described below.

Examples of the persulfates representative of the polymerization initiator include potassium persulfate, sodium persulfate, ammonium persulfate, and the like, and typical examples of the organic peroxides include diacyl peroxides such as benzoyl peroxide, lauroyl peroxide, decanoyl peroxide, and the like; dialkyl peroxides such as tert-butylcumyl peroxide, dicumyl peroxide, and the like; peroxyesters such as tert-butyl peroxylaurate, tert-butyl peroxybenzoate, and the like; and hydroperoxides such as cumene hydroperoxide, para-menthane hydroperoxide, tert-butyl hydroperoxide, and the like.

Usable examples of the reducing agent include ascorbic acid and its salts, erythorbic acid and its salts, tartaric acid and its salts, citric acid and its salts, formaldehyde sulfoxylate metal salts, sodium thiosulfate, sodium bisulfite, ferric chloride, and the like.

The amount of the polymerization initiator used may be an amount which allows polymerization to smoothly proceed, but is preferably as small as possible from the viewpoint of maintaining the excellent water resistance of the resultant coating film and is preferably 0.01% by mass to 0.5% by mass relative to the total amount of vinyl monomers used for producing the vinyl polymer. When the polymerization initiator is used in combination with the reducing agent, a total amount of use is also preferably within the above-described range.

In the present invention, only water or a mixed solution of water and a water-soluble solvent may be used as the aqueous medium (C). Examples of the water-soluble solvent include monoalcohols such as methyl alcohol, ethyl alcohol, isopropyl alcohol, ethyl carbitol, ethyl cellosolve, butyl cellosolve, and the like; and polar solvents such as methyl ethyl ketone, N-methyl-2-pyrrolidone, and the like; which can be used alone or as a mixture of two or more.

The amount of the water-soluble solvent used is preferably minimized in view of danger of catching fire and toxicity of the aqueous resin composition of the present invention. Therefore, water alone is particularly preferably used as the aqueous medium (C).

The aqueous resin composition of the present invention can be produced by a method of mixing the water dispersion of the resin (B) produced as described above with the film-forming aid and agitating the resultant mixture.

Also, the aqueous resin composition of the present invention can be produced by a method of supplying the film-forming aid in the step of producing the water dispersion of the resin (B) produced as described above.

Specifically, in use of the urethane resin (b1) as the resin (B), when the urethane resin (b1) is produced through a step (X1) of producing the urethane resin (b1) or a urethane prepolymer as a precursor (b1') of the urethane resin (b1) in the presence of no solvent or an organic solvent, a step (Y1) of, if required, neutralizing and dispersing the urethane resin (b1) or the precursor (b1') in an aqueous medium (C), and a step (Z1) of, if required, performing elongation reaction of the precursor (b1'), a method of supplying the film-forming aid after passing through the step (Y1) is used. When the urethane resin (b1) or the precursor (b1') before water dispersion does not contain an isocyanate group, the film-forming aid may be supplied at any desired timing.

In use of the composite resin (b2) as the resin (B), when the composite resin (b2) is produced by adding a vinyl monomer in divided amounts or a total amount and then polymerizing the vinyl monomer after passing through a step (X2) of producing a urethane resin as a precursor (b2') of the composite resin (b2) in the presence of no solvent or an organic solvent, a step (Y2) of, if required, neutralizing the urethane resin and dispersing the precursor (b2') in an aqueous medium (C), and a step (Z2) of, if required, performing elongation reaction of the precursor (b2'), a method of supplying the film-forming aid after passing through the step (Y2) is used.

Also, when the composite resin (b2) is produced by adding a vinyl monomer in divided amounts or a total amount and then polymerizing the vinyl monomer after passing through a step (X3) of producing a urethane resin as a precursor (b2') of the composite resin (b2) by reacting polyol and polyisocyanate in the presence of a vinyl monomer, a step (Y3) of, if required, neutralizing the urethane resin and dispersing the precursor (b2') in an aqueous medium (C), and a step (Z3) of, if required, performing elongation reaction of the precursor (b2'), a method of supplying the film-forming aid after passing through the step (Y3) is used.

Examples of the organic solvent which can be used in the reaction include ketones such as acetone, methyl ethyl ketone, and the like; ethers such as tetrahydrofuran, dioxane, ethylene glycol dimethyl ether, ethylene glycol diethyl ether, diethylene glycol dimethyl ether, diethylene glycol diethyl ether, propylene glycol dimethyl ether, propylene glycol diethyl ether, dipropylene glycol dimethyl ether, and the like; acetic acid esters such as ethyl acetate, butyl acetate, and the like; which can be used alone or in combination or two or more. In particular, when the organic solvent is distilled off from the aqueous urethane resin composition, methyl ethyl ketone having high solubility of the urethane resin is preferably used, while when the organic solvent remains, dipropylene glycol dimethyl ether having low toxicity is preferably used.

When the organic solvent used in the process for producing the resin (B) remains in the resultant aqueous resin composition, if required, the solvent may be removed.

Also, in producing the aqueous resin composition of the present invention, a compound having a hydrophilic group may be used as an aid which supports dissolution or dispersion of the resin (B) in water.

A compound having an anionic group, a compound having a cationic group, a compound having an amphoteric group, or a compound having a nonionic group can be used as the compound having a hydrophilic group, and a compound having a nonionic group is preferably used from the viewpoint of maintaining excellent storage stability of the aqueous urethane resin composition of the present invention.

A compound which can be used as the compound having a nonionic group is a compound having at least one active hydrogen atom in its molecule and having at least one functional group selected from the group consisting of a group containing ethylene oxide as a repeat unit and a group containing ethylene oxide as a repeat unit and another alkylene oxide as a repeat unit.

For example, it is possible to use a compound having a nonionic group such as polyoxyethylene glycol, polyoxyethylene-polyoxypropylene copolymer glycol, polyoxyethylene-polyoxybutylene copolymer glycol, or polyoxyethylene-polyoxyalkylene copolymer glycol, monoalkyl ether thereof, or the like, which has 30% by mass or more of an ethylene oxide repeat unit, at least one active hydrogen atom in its polymer, and a number-average molecular weight of 300 to 20,000, or a compound produced by copolymerization of any of these compounds, such as polyester polyether polyol or the like.

If required, the aqueous resin composition of the present invention may be combined with a curing agent and a curing catalyst within a range which does not impair the effect of the present invention.

Usable examples of the curing agent include a compound having a silanol group and/or a hydrolysable silyl group, a polyepoxy compound, a polyoxazoline compound, polyisocyanate, and the like.

Among these, the compound having a silanol group and/or a hydrolysable silyl group is preferred as the curing agent in order to form a cross-linked coating film with excellent solvent resistance. In particular, when the aqueous resin composition of the present invention is used as a coating agent for a metallic substrate, the hydrolysable silyl group or the silanol group of the compound can improve adhesion with a metal of the substrate, thereby forming a coating film having excellent corrosion resistance.

For example, an alkoxysilyl group is preferably used as the hydrolysable silyl group because it has a high cross-linking ability and improves solvent resistance. In particular, a trimethoxysilyl group and a triethoxysilyl group are preferred as the alkoxysilyl group because these groups have excellent cross-linking ability and improve solvent resistance.

Usable examples of the compound having a silanol group and/or a hydrolysable silyl group include epoxy silane compounds such as γ-glycidoxypropyl trimethoxysilane, γ-glycidoxypropyl triethoxysilane, γ-glycidoxypropylmethyl dimethoxysilane, y-glycidoxypropylmethyl diethoxysilane, 2-(3,4-epoxycyclohexyl)ethyl trimethoxysilane, 2-(3,4-epoxycyclohexyl)ethyl triethoxysilane, and the like, aminosilanes such as γ-aminopropyl trimethoxysilane, γ-aminopropyl triethoxysilane, γ-aminopropylmethyl dimethoxysilane, γ-aminopropylmethyl diethoxysilane, and the like.

In particular, at least one selected from the group consisting of γ-glycidoxypropyl trimethoxysilane, γ-glycidoxypropyl triethoxysilane, and 2-(3,4-epoxycyclohexyl)ethyl trimethoxysilane is preferably used because a cross-linking density of a coating film is improved to improve chemical resistance and solvent resistance.

In order to form a coating film having excellent chemical resistance and solvent resistance and produce the aqueous resin composition of the present invention having excellent storage stability, the compound having a silanol group and/or a hydrolysable silyl group is preferably used within a range of 0.1% by mass to 10% by mass relative to the total amount of the resin (B).

In addition, examples of the curing catalyst which can be used for the aqueous resin composition of the present invention include lithium hydroxide, sodium hydroxide, potassium hydroxide, sodium methylate, tetraisopropyl titanate, tetra-n-butyl titanate, tin octylate, lead octylate, cobalt octylate, zinc octylate, calcium octylate, zinc naphthenate, cobalt naphthenate, di-n-butyltin diacetate, di-n-butyltin dioctoate, di-n-butyltin dilaurate, di-n-butyltin maleate, p-toluenesulfonic acid, trichloroacetic acid, phosphoric acid, monoalkylphosphoric acid, dialkylphosphoric acid, monoalkylphosphorous acid, dialkylphosphorous acid, and the like.

If required, the aqueous resin composition of the present invention may contain an emulsifier, a dispersion stabilizer, and a leveling agent, but preferably contains these agents in as small amounts as possible, for example, 0.5% by mass or less relative to the solid content of the aqueous resin composition, from the viewpoint of suppressing deterioration of water resistance of a cross-linked coating film.

As described above, the aqueous resin composition of the present invention can be used as various coating agents for the purpose of supporting the surfaces of various substrates and imparting a graphical design function to various substrates.

Examples of the substrates include plastics and films thereof, metals, glass, paper, wood, and the like. In particular, when a coating agent of the present invention is used for various plastic substrates, coating films having excellent solvent resistance and water resistance can be formed even by a step of drying at a relatively low temperature, and peeling of the coating films from plastic substrates can be prevented.

Materials of the plastic substrates are those generally used for plastic moldings such as cellular phones, home electric appliances, automotive interior/exterior materials, OA apparatuses, etc., for example, acrylonitrile-butadienestyrene resins (ABS resins), polycarbonate resins (PC resins), ABS/PC resins, polystyrene resins (PS resins), polymethyl methacrylate resins (PMMA resins), acrylic resins, polypropylene resins, polyethylene resins, and the like. Usable examples of plastic film substrates include polyethylene terephthalate films, polyester films, polyethylene films, polypropylene films, TAC (triacetyl cellulose) films, polycarbonate films, polyvinyl chloride films, and the like.

The coating agent of the present invention can form a cross-linked coating film densely formed so as to suppress corrosion of a metallic material, and thus can be preferably used as a coating agent for metallic substrates.

Usable examples of the metallic substrates include coated steel sheets such as galvanized steel sheets, aluminum-zinc alloy steel sheets, and the like, which are used for applications such as automobile cars, home electric appliances, building materials, and the like; aluminum sheets, aluminum alloy sheets, magnetic steel sheets, copper sheets, stainless steel sheets, and the like.

The coating agent of the present invention can form a coating film having excellent chemical resistance, such as acid resistance, alkali resistance, etc., even when a cross-linked coating film has a thickness of about 5 µm. Also, the coating agent of the present invention can form a coating film having excellent chemical resistance, such as acid resistance, alkali resistance, etc., even when a coating film has a thickness of about 1 µm.

The coating agent of the present invention can form a coating film by applying the agent on a substrate, and drying and then curing the agent.

Examples of a method of applying the coating agent include a spray method, a curtain coater method, a flow coater method, a roll coater method, a brushing method, a dipping method, and the like.

The drying may be either natural drying at room temperature or heat drying. In general, heat drying is preferably performed at 40°C to 250°C for about 1 to 600 seconds.

In addition, when the substrate is a plastic substrate or the like which is easily deformed by heat, the drying temperature of a coating film is preferably adjusted to about 80°C or less. A coating film formed by drying a usual coating agent at a low temperature of 80°C or less may not have satisfactory solvent resistance. On the other hand, the coating agent of the present invention can form a coating film exhibiting excellent solvent resistance, water resistance, and chemical resistance even when dried at a low temperature of 80°C for a sort time of several seconds because the film-forming property of the coating film is improved by the film-forming aid.

### EXAMPLES

The present invention is described in detail below with reference of examples.

### [EXAMPLE 1] Preparation of aqueous resin composition (1-1)

In a vessel purged with nitrogen and provided with a thermometer, a nitrogen gas inlet tube, and a stirrer, 100 parts by mass of polyester polyol (polyester polyol produced by reacting 1,6-hexanediol and neopentylglycol with adipic acid, hydroxyl equivalent: 1000 g/eq) was added and then dehydrated at 120°C to 130°C under a reduced pressure of 0.095 MPa.

After dehydration, 13 parts by mass of 2,2-dimethylolpropionic acid, 21 parts by mass of 1,4-cyclohexanedimethanol, and 114 parts by mass of methyl ethyl ketone were added under cooling to 50°C, and then sufficiently stirred and mixed. After stirring and mixing, 42 parts by mass of dicylcohexylmethane diisocyanate, 35 parts by mass of isophorone diisocyanate, and 0.03 parts by mass of stannous octylate were added to the mixture, and then subjected to reaction at 75°C to produce an organic solvent solution of a urethane prepolymer having an isocyanate group at a molecular end.

Next, 59 parts by mass of methyl ethyl ketone was added to the organic solvent solution of the urethane prepolymer, and the resultant mixture was cooled to 50°C, and carboxyl groups of the urethane prepolymer were neutralized by adding 10 parts by mass of triethylamine. Further, 490 parts by mass of water was added to the mixture and sufficiently agitated to produce an aqueous dispersion of a urethane resin having anionic groups formed by neutralizing the carboxyl groups.

Next, 5.2 parts by mass of a 25 mass% aqueous ethylenediamine solution was added to the aqueous dispersion, and the resultant mixture was sufficiently agitated and mixed to elongate the chain of the polyurethane resin. Next, 32 parts by mass of 1,3-butanediol and 32 parts by mass of 1,2-propanediol were added and mixed with the ployurethane resin, and then methyl ethyl ketone was distilled off by solvent removal, and if required, a nonvolatile content was adjusted with an aqueous medium to produce an aqueous resin composition (I-1) having a nonvolatile content of 30% by mass and containing a urethane bond and a urea bond in a total of 3.0 mmol/g relative to the total amount of the urethane resin.

### [EXAMPLE 2] Preparation of aqueous resin composition (1-2)

In a vessel purged with nitrogen and provided with a thermometer, a nitrogen gas inlet tube, and a stirrer, 100 parts by mass of polyester polyol (polyester polyol produced by reacting 1,6-hexanediol and neopentylglycol with adipic acid, hydroxyl equivalent: 1000 g/eq) was added and then dehydrated at 120°C to 130°C under a reduced pressure of 0.095 MPa.

After dehydration, 13 parts by mass of 2,2-dimethylolpropionic acid, 21 parts by mass of 1,4-cyclohexanedimethanol, and 114 parts by mass of methyl ethyl ketone were added under cooling to 50°C, and then sufficiently stirred and mixed. After stirring and mixing, 42 parts by mass of dicylcohexylmethane diisocyanate, 35 parts by mass of isophorone diisocyanate, and 0.03 parts by mass of stannous octylate were added to the mixture, and then subjected to reaction at 75°C to produce an organic solvent solution of a urethane prepolymer having an isocyanate group at a molecular end.

Next, 59 parts by mass of methyl ethyl ketone was added to the organic solvent solution of the urethane prepolymer, and the resultant mixture was cooled to 50°C, and carboxyl groups of the urethane prepolymer were neutralized by adding 10 parts by mass of triethylamine. Further, 490 parts by mass of water was added to the mixture and sufficiently agitated to produce an aqueous dispersion of a urethane resin having anionic groups formed by neutralizing the carboxyl groups.

Next, 5.2 parts by mass of a 25 mass% aqueous ethylenediamine solution was added to the aqueous dispersion, and the resultant mixture was sufficiently agitated and mixed to elongate the chain of the polyurethane resin. Next, 32 parts by mass of 1,3-butanediol and 32 parts by mass of 1,2-propanediol were added and mixed with the ployurethane resin, and then methyl ethyl ketone was distilled off by solvent removal, and if required, a nonvolatile content was adjusted with an aqueous medium to produce a water dispersion of the urethane resin having a nonvolatile content of 30% by mass and containing a urethane bond and a urea bond in a total of 3.0 mmol/g relative to the total amount of the urethane resin.

Next, 125 parts by mass of water was added to 100 parts by mass of the resultant water dispersion of the urethane resin, and the mixture was heated to 80°C while nitrogen gas was brown in the mixture. Then, a vinyl monomer mixture containing 60 parts by mass of methyl methacrylate and 40 parts by mass of n-butyl acrylate and 20 parts by mass of an aqueous ammonium persulfate solution (concentration: 0.5% by mass) serving as a polymerization initiator were added dropwise to the mixture under stirring from separated dropping funnels over 120 minutes while the temperature in the reactor was kept at 80 ±2°C, causing polymerization to take place. After the addition, stirring was performed at the temperature for 60 minutes, and then a nonvolatile content was adjusted with an aqueous medium to produce an aqueous resin composition (1-2) having a nonvolatile content of 30% by mass and including an aqueous dispersion of a urethane-vinyl composite resin containing a vinyl resin, which was formed by polymerization of the vinyl monomers and was present in particles of the urethane resin. The urethane resin and the vinyl resin did not form chemical bonds.

### [EXAMPLE 3] Preparation of aqueous resin composition (1-3)

In a vessel purged with nitrogen and provided with a thermometer, a nitrogen gas inlet tube, and a stirrer, 100 parts by mass of polyester polyol (polyester polyol produced by reacting 1,6-hexanediol and neopentylglycol with adipic acid, hydroxyl equivalent: 1000 g/eq) was added and then dehydrated at 120°C to 130°C under a reduced pressure of 0.095 MPa.

After dehydration, 13 parts by mass of 2,2-dimethylolpropionic acid, 21 parts by mass of 1,4-cyclohexanedimethanol, and 114 parts by mass of methyl ethyl ketone were added under cooling to 50°C, and then sufficiently stirred and mixed. After stirring and mixing, 42 parts by mass of dicylcohexylmethane diisocyanate, 35 parts by mass of isophorone diisocyanate, and 0.03 parts by mass of stannous octylate were added to the mixture, and then subjected to reaction at 75°C to produce an organic solvent solution of a urethane prepolymer having an isocyanate group at a molecular end.

Next, 59 parts by mass of methyl ethyl ketone was added to the organic solvent solution of the urethane prepolymer, and the resultant mixture was cooled to 50°C, and carboxyl groups of the urethane prepolymer were neutralized by adding 10 parts by mass of triethylamine. Further, 490 parts by mass of water was added to the mixture and sufficiently agitated to produce an aqueous dispersion of a urethane resin having anionic groups formed by neutralizing the carboxyl groups.

Next, 5.2 parts by mass of a 25 mass% aqueous ethylenediamine solution was added to the aqueous dispersion, and the resultant mixture was sufficiently agitated and mixed to elongate the chain of the polyurethane resin. Next, 32 parts by mass of 1,3-butanediol and 32 parts by mass of 1,2-butanediol were added and mixed with the ployurethane resin, and then methyl ethyl ketone was distilled off by solvent removal, and if required, a nonvolatile content was adjusted with an aqueous medium to produce an aqueous resin composition (I-3) having a nonvolatile content of 30% by mass and containing a urethane bond and a urea bond in a total of 3.0 mmol/g relative to the total amount of the urethane resin.

### [EXAMPLE 4] Preparation of aqueous resin composition (I-4)

In a vessel purged with nitrogen and provided with a thermometer, a nitrogen gas inlet tube, and a stirrer, 100 parts by mass of polyester polyol (polyester polyol produced by reacting 1,6-hexanediol and neopentylglycol with adipic acid, hydroxyl equivalent: 1000 g/eq) was added and then dehydrated at 120°C to 130°C under a reduced pressure of 0.095 MPa.

After dehydration, 13 parts by mass of 2,2-dimethylolpropionic acid, 21 parts by mass of 1,4-cyclohexanedimethanol, and 114 parts by mass of methyl ethyl ketone were added under cooling to 50°C, and then sufficiently stirred and mixed. After stirring and mixing, 42 parts by mass of dicylcohexylmethane diisocyanate, 35 parts by mass of isophorone diisocyanate, and 0.03 parts by mass of stannous octylate were added to the mixture, and then subjected to reaction at 75°C to produce an organic solvent solution of a urethane prepolymer having an isocyanate group at a molecular end.

Next, 59 parts by mass of methyl ethyl ketone was added to the organic solvent solution of the urethane prepolymer, and the resultant mixture was cooled to 50°C, and carboxyl groups of the urethane prepolymer were neutralized by adding 10 parts by mass of triethylamine. Further, 455 parts by mass of water was added to the mixture and sufficiently agitated to produce an aqueous dispersion of a urethane resin having anionic groups formed by neutralizing the carboxyl groups.

Next, 5.2 parts by mass of a 25 mass% aqueous ethylenediamine solution was added to the aqueous dispersion, and the resultant mixture was sufficiently agitated and mixed to elongate the chain of the polyurethane resin. Next, 64 parts by mass of 1,3-butanediol and 21 parts by mass of 1,2-propanediol were added and mixed with the ployurethane resin, and then methyl ethyl ketone was distilled off by solvent removal, and if required, a nonvolatile content was adjusted with an aqueous medium to produce an aqueous resin composition (I-4) having a nonvolatile content of 30% by mass and containing a urethane bond and a urea bond in a total of 3.0 mmol/g relative to the total amount of the urethane resin.

### [EXAMPLE 5] Preparation of aqueous resin composition (1-5)

In a vessel purged with nitrogen and provided with a thermometer, a nitrogen gas inlet tube, and a stirrer, 50 parts by mass of polyester polyol (polyester polyol produced by reacting 1,5-hexanediol and neopentylglycol with adipic acid, hydroxyl equivalent: 500 g/eq) was added and then dehydrated at 120°C to 130°C under a reduced pressure of 0.095 MPa.

After dehydration, 13 parts by mass of 2,2-dimethylolpropionic acid, 21 parts by mass of 1,4-cyclohexanedimethanol, and 103 parts by mass of methyl ethyl ketone were added under cooling to 50°C, and then sufficiently stirred and mixed. After stirring and mixing, 58 parts by mass of dicylcohexylmethane diisocyanate, 49 parts by mass of isophorone diisocyanate, and 0.03 parts by mass of stannous octylate were added to the mixture, and then subjected to reaction at 75°C to produce an organic solvent solution of a urethane prepolymer, having an isocyanate group at a molecular end.

Next, 53 parts by mass of methyl ethyl ketone was added to the organic solvent solution of the urethane prepolymer, and the resultant mixture was cooled to 50°C, and carboxyl groups of the urethane prepolymer were neutralized by adding 10 parts by mass of triethylamine. Further, 416 parts by mass of water was added to the mixture and sufficiently agitated to produce an aqueous dispersion of a urethane resin having anionic groups formed by neutralizing the carboxyl groups.

Next, 32 parts by mass of a 25 mass% aqueous ethylenediamine solution was added to the aqueous dispersion, and the resultant mixture was sufficiently agitated and mixed to elongate the chain of the polyurethane resin. Next, 30 parts by mass of 1,3-butanediol and 60 parts by mass of 1,2-propanediol were added and mixed with the polyurethane resin, and then methyl ethyl ketone was distilled off by solvent removal, and if required, a nonvolatile content was adjusted with an aqueous medium to produce an aqueous resin composition (1-5) having a nonvolatile content of 30% by mass and containing a urethane bond and a urea bond in a total of 4.4 mmol/g relative to the total amount of the urethane resin.

### [EXAMPLE 6] Preparation of aqueous resin composition (I-6)

In a vessel purged with nitrogen and provided with a thermometer, a nitrogen gas inlet tube, and a stirrer, 100 parts by mass of polyester polyol (polyester polyol produced by reacting 1,6-hexanediol and neopentylglycol with adipic acid, hydroxyl equivalent: 1000 g/eq) was added and then dehydrated at 120°C to 130°C under a reduced pressure of 0.095 MPa.

After dehydration, 13 parts by mass of 2,2-dimethylolpropionic acid, 21 parts by mass of 1,4-cyclohexanedimethanol, and 114 parts by mass of methyl ethyl ketone were added under cooling to 50°C, and then sufficiently stirred and mixed. After stirring and mixing, 42 parts by mass of dicylcohexylmethane diisocyanate, 35 parts by mass of isophorone diisocyanate, and 0.03 parts by mass of stannous octylate were added to the mixture, and then subjected to reaction at 75°C to produce an organic solvent solution of a urethane prepolymer, having an isocyanate group at a molecular end.

Next, 59 parts by mass of methyl ethyl ketone was added to the organic solvent solution of the urethane prepolymer, and the resultant mixture was cooled to 50°C, and carboxyl groups of the urethane prepolymer were neutralized by adding 10 parts by mass of triethylamine. Further, 490 parts by mass of water was added to the mixture and sufficiently agitated to produce an aqueous dispersion of a urethane resin having anionic groups formed by neutralizing the carboxyl groups.

Next, 5.2 parts by mass of a 25 mass% aqueous ethylenediamine solution was added to the aqueous dispersion, and the resultant mixture was sufficiently agitated and mixed to elongate the chain of the polyurethane resin. Next, 64 parts by mass of 1,3-butanediol was added and mixed with the polyurethane resin, and then methyl ethyl ketone was distilled off by solvent removal, and if required, a nonvolatile content was adjusted with an aqueous medium to produce an aqueous resin composition (1-6) having a nonvolatile content of 30% by mass and containing a urethane bond and a urea bond in a total of 3.0 mmol/g relative to the total amount of the urethane resin.

### [EXAMPLE 7] Preparation of aqueous resin composition (I-7)

In a vessel purged with nitrogen and provided with a thermometer, a nitrogen gas inlet tube, and a stirrer, 100 parts by mass of polyester polyol (polyester polyol produced by reacting 1,6-hexanediol and neopentylglycol with adipic acid, hydroxyl equivalent: 1000 g/eq) was added and then dehydrated at 120°C to 130°C under a reduced pressure of 0.095 MPa.

After dehydration, 13 parts by mass of 2,2-dimethylolpropionic acid, 21 parts by mass of 1,4-cyclohexanedimethanol, and 114 parts by mass of methyl ethyl ketone were added under cooling to 50°C, and then sufficiently stirred and mixed. After stirring and mixing, 42 parts by mass of dicylcohexylmethane diisocyanate, 35 parts by mass of isophorone diisocyanate, and 0.03 parts by mass of stannous octylate were added to the mixture, and then subjected to reaction at 75°C to produce an organic solvent solution of a urethane prepolymer having an isocyanate group at a molecular end.

Next, 59 parts by mass of methyl ethyl ketone was added to the organic solvent solution of the urethane prepolymer, and the resultant mixture was cooled to 50°C, and carboxyl groups of the urethane prepolymer were neutralized by adding 10 parts by mass of triethylamine. Further, 490 parts by mass of water was added to the mixture and sufficiently agitated to produce an aqueous dispersion of a urethane resin having anionic groups formed by neutralizing the carboxyl groups.

Next, 5.2 parts by mass of a 25 mass% aqueous ethylenediamine solution was added to the aqueous dispersion, and the resultant mixture was sufficiently agitated and mixed to elongate the chain of the polyurethane resin. Next, 6 parts by mass of 1,3-butanediol and 43 parts by mass of 1,2-propanediol were added and mixed with the polyurethane resin, and then methyl ethyl ketone was distilled off by solvent removal, and if required, a nonvolatile content was adjusted with an aqueous medium to produce an aqueous resin composition (1-7) having a nonvolatile content of 30% by mass and containing a urethane bond and a urea bond in a total of 3.0 mmol/g relative to the total amount of the urethane resin.

### [EXAMPLE 8] Preparation of aqueous resin composition (I-8)

In a vessel purged with nitrogen and provided with a thermometer, a nitrogen gas inlet tube, and a stirrer, 100 parts by mass of polyester polyol (polyester polyol produced by reacting 1,6-hexanediol and neopentylglycol with adipic acid, hydroxyl equivalent: 1000 g/eq) was added and then dehydrated at 120°C to 130°C under a reduced pressure of 0.095 MPa.

After dehydration, 13 parts by mass of 2,2-dimethylolpropionic acid, 21 parts by mass of 1,4-cyclohexanedimethanol, and 114 parts by mass of methyl ethyl ketone were added under cooling to 50°C, and then sufficiently stirred and mixed. After stirring and mixing, 42 parts by mass of dicylcohexylmethane diisocyanate, 35 parts by mass of isophorone diisocyanate, and 0.03 parts by mass of stannous octylate were added to the mixture, and then subjected to reaction at 75°C to produce an organic solvent solution of a urethane prepolymer having an isocyanate group at a molecular end.

Next, 59 parts by mass of methyl ethyl ketone was added to the organic solvent solution of the urethane prepolymer, and the resultant mixture was cooled to 50°C, and carboxyl groups of the urethane prepolymer were neutralized by adding 10 parts by mass of triethylamine. Further, 392 parts by mass of water was added to the mixture and sufficiently agitated to produce an aqueous dispersion of a urethane resin having anionic groups formed by neutralizing the carboxyl groups.

Next, 5.2 parts by mass of a 25 mass% aqueous ethylenediamine solution was added to the aqueous dispersion, and the resultant mixture was sufficiently agitated and mixed to elongate the chain of the polyurethane resin. Next, 64 parts by mass of 1,3-butanediol and 106 parts by mass of 1,2-propanediol were added and mixed with the polyurethane resin, and then methyl ethyl ketone was distilled off by solvent removal, and if required, a nonvolatile content was adjusted with an aqueous medium to produce an aqueous resin composition (I-8) having a nonvolatile content of 30% by mass and containing a urethane bond and a urea bond in a total of 3.0 mmol/g relative to the total amount of the urethane resin.

### [EXAMPLE 9] Preparation of aqueous resin composition (I-9)

In a vessel purged with nitrogen and provided with a thermometer, a nitrogen gas inlet tube, and a stirrer, 80 parts by mass of polyester polyol (polyester polyol produced by reacting 1,4-butanediol and neopentylglycol with terephthalic acid and adipic acid, hydroxyl equivalent: 1399 g/eq) and 43 parts by mass of polycarbonate polyol (polycarbonate polyol produced by reacting 1,6-hexanediol with dimethyl carbonate, hydroxyl equivalent: 1516 g/eq) were added and then dehydrated at 120°C to 130°C under a reduced pressure of 0.095 MPa.

After dehydration, 7 parts by mass of 2,2-dimethylolpropionic acid and 87 parts by mass of methyl ethyl ketone were added under cooling to 50°C, and then sufficiently stirred and mixed. After stirring and mixing, 31 parts by mass of dicylcohexylmethane diisocyanate and 0.02 parts by mass of stannous octylate were added to the mixture, and then subjected to reaction at 75°C to produce an organic solvent solution of a urethane prepolymer having an isocyanate group at a molecular end.

Next, the organic solvent solution of the urethane prepolymer, was cooled to 50°C and reacted with 2 parts by mass of A1100 (aminopropyl triethoxysilane). Then, 47 parts by mass of methyl ethyl ketone was added to the reaction solution which was then cooled to 50°C, and carboxyl groups of the urethane prepolymer were neutralized by adding 5 parts by mass of triethylamine. Further, 378 parts by mass of water was added to the mixture and sufficiently agitated to produce an aqueous dispersion of a urethane resin having anionic groups formed by neutralizing the carboxyl groups.

Next, 3.8 parts by mass of 20 mass% hydrogenated hydrazine was added to the aqueous dispersion, and the resultant mixture was sufficiently agitated and mixed to elongate the chain of the polyurethane resin. Next, 8 parts by mass of 1,3-butanediol and 8 parts by mass of 1,3-propanediol were added and mixed with the polyurethane resin, and then methyl ethyl ketone was distilled off by solvent removal, and if required, a nonvolatile content was adjusted with an aqueous medium to produce an aqueous resin composition (1-9) having a nonvolatile content of 30% by mass and containing a urethane bond and a urea bond in a total of 1.4 mmol/g relative to the total amount of the urethane resin.

### [EXAMPLE 10] Preparation of aqueous resin composition (I-10)

In a four-neck flask provided with a thermometer, a stirrer, a reflux condenser, and a dropping device, 590 parts by mass of polypropylene glycol diglycidyl ether (epoxy equivalent: 201 g/eq) was placed, and then the flask was purged with nitrogen. Next, the flask was heated with an oil bath until the temperature in the flask was 70°C, and then 380 parts by mass of di-n-butylamine was added dropwise using the dropping device over 30 minutes. After the completion of addition, reaction was effected at 90°C for 10 hours. After the completion of reaction, it was confirmed by an infrared spectrophotometer (FT/IR-460 Plus, manufactured by JASCO Corporation) that an absorption peak near 842 cm⁻¹ due to an epoxy group in the reaction product disappeared, and polyol (X-1) having a tertiary amino group (amine equivalent: 339 g/eq, hydroxyl equivalent: 339 g/equivalent) was prepared.

Next, in a vessel purged with nitrogen and provided with a thermometer, a nitrogen gas inlet tube, and a stirrer, 50 parts by mass of polyester polyol (polyester polyol produced by reacting 1,6-hexanediol and neopentylglycol with adipic acid, hydroxyl equivalent: 1000 g/eq) and 60 parts by mass of polycarbonate polyol (polycarbonate polyol produced by reacting 1,6-hexanediol with diethyl carbonate, hydroxyl equivalent: 500 g/eq) were added and then dehydrated at 120°C to 130°C under a reduced pressure of 0.095 MPa.

After dehydration, 10 parts by mass of the polyol (X-1) having a tertiary amino group was added under cooling to 50°C, and further 89 parts by mass of methyl ethyl ketone was added and then sufficiently stirred and mixed.

After stirring and mixing, 45 parts by mass of dicylcohexylmethane diisocyanate and 0.02 parts by mass of stannous octylate were added to the mixture, and then subjected to reaction at 75°c to produce an organic solvent solution of a urethane prepolymer having an isocyanate group at a molecular end.

Next, the organic solvent solution of the urethane prepolymer was cooled to 50°C and reacted with 6 parts by mass of A1100 (aminopropyl triethoxysilane). Then, 168 parts by mass of methyl ethyl ketone and 3 parts by mass of ethylenediamine were added to the reaction solution, and the resultant mixture was sufficiently agitated and mixed to elongate the chain of the polyurethane resin. Next, the tertiary amino groups possessed by the urethane polymer were neutralized by adding 3 parts by mass of phosphoric acid, and further 533 parts by mass of water was added to the resultant mixture and sufficiently agitated to produce an aqueous dispersion of a urethane resin having cationic groups formed by neutralizing the tertiary amino groups with phosphoric acid.

Next, 17 parts by mass of 1,3-butanediol and 17 parts by mass of 1,2-propanediol were added and mixed with the aqueous dispersion, and then methyl ethyl ketone was distilled off by solvent removal, and a nonvolatile content was adjusted with an aqueous medium to produce a urethane resin composition (I-10) containing a urethane bond and a urea bond in a total of 2.0 mmol/g relative to the total amount of the urethane resin and a nonvolatile content of 30% by mass.

### [COMPARATIVE EXAMPLE 1] Preparation of aqueous resin composition (I'-1)

In a vessel purged with nitrogen and provided with a thermometer, a nitrogen gas inlet tube, and a stirrer, 100 parts by mass of polyester polyol (polyester polyol produced by reacting 1,6-hexanediol and neopentylglycol with adipic acid, hydroxyl equivalent: 1000 g/eq) was added and then dehydrated at 120°C to 130°C under a reduced pressure of 0.095 MPa.

After dehydration, 13 parts by mass of 2,2-dimethylolpropionic acid, 21 parts by mass of 1,4-cyclohexanedimethanol, 50 parts by mass of methyl ethyl ketone, and 64 parts by mass of N-methyl-2-pyrrolidone were added under cooling to 50°C, and then sufficiently stirred and mixed. After stirring and mixing, 42 parts by mass of dicylcohexylmethane diisocyanate, 35 parts by mass of isophorone diisocyanate, and 0.03 parts by mass of stannous octylate were added to the mixture, and then subjected to reaction at 75°C to produce an organic solvent solution of a urethane prepolymer having an isocyanate group at a molecular end.

Next, 59 parts by mass of methyl ethyl ketone was added to the organic solvent solution of the urethane prepolymer, and the resultant mixture was cooled to 50°C, and carboxyl groups of the urethane prepolymer were neutralized by adding 10 parts by mass of triethylamine. Further, 422 parts by mass of water was added to the mixture and sufficiently agitated to produce an aqueous dispersion of a urethane resin having anionic groups formed by neutralizing the carboxyl groups.

Next, 5.2 parts by mass of a 25 mass% aqueous ethylenediamine solution was added to the aqueous dispersion, and the resultant mixture was sufficiently agitated and mixed to elongate the chain of the polyurethane resin. Next, methyl ethyl ketone was distilled off by solvent removal, and if required, a nonvolatile content was adjusted with an aqueous medium to produce an aqueous resin composition (I'-1) having a nonvolatile content of 30% by mass and containing a urethane bond and a urea bond in a total of 3.0 mmol/g relative to the total amount of the urethane resin.

### [COMPARATIVE EXAMPLE 2] Preparation of aqueous resin composition (I'-2)

In a vessel purged with nitrogen and provided with a thermometer, a nitrogen gas inlet tube, and a stirrer, 100 parts by mass of polyester polyol (polyester polyol produced by reacting 1,6-hexanediol and neopentylglycol with adipic acid, hydroxyl equivalent: 1000 g/eq) was added and then dehydrated at 120°C to 130°C under a reduced pressure of 0.095 MPa.

After dehydration, 13 parts by mass of 2,2-dimethylolpropionic acid, 21 parts by mass of 1,4-cyclohexanedimethanol, 50 parts by mass of methyl ethyl ketone, and 64 parts by mass of dipropylene glycol dimethyl ether were added under cooling to 50°C, and then sufficiently stirred and mixed. After stirring and mixing, 42 parts by mass of dicylcohexylmethane diisocyanate, 35 parts by mass of isophorone diisocyanate, and 0.03 parts by mass of stannous octylate were added to the mixture, and then subjected to reaction at 75°C to produce an organic solvent solution of a urethane prepolymer having an isocyanate group at a molecular end.

Next, 59 parts by mass of methyl ethyl ketone was added to the organic solvent solution of the urethane prepolymer, and the resultant mixture was cooled to 50°C, and carboxyl groups of the urethane prepolymer were neutralized by adding 10 parts by mass of triethylamine. Further, 422 parts by mass of water was added to the mixture and sufficiently agitated to produce an aqueous dispersion of a urethane resin having anionic groups formed by neutralizing the carboxyl groups.

Next, 5.2 parts by mass of a 25 mass% aqueous ethylenediamine solution was added to the aqueous dispersion, and the resultant mixture was sufficiently agitated and mixed to elongate the chain of the polyurethane resin. Next, methyl ethyl ketone was distilled off by solvent removal, and if required, a nonvolatile content was adjusted with an aqueous medium to produce an aqueous resin composition (I'-2) having a nonvolatile content of 30% by mass and containing a urethane bond and a urea bond in a total of 3.0 mmol/g relative to the total amount of the urethane resin.

### [COMPARATIVE EXAMPLE 3] Preparation of aqueous resin composition (I'-3)

In a vessel purged with nitrogen and provided with a thermometer, a nitrogen gas inlet tube, and a stirrer, 100 parts by mass of polyester polyol (polyester polyol produced by reacting 1,6-hexanediol and neopentylglycol with adipic acid, hydroxyl equivalent: 1000 g/eq) was added and then dehydrated at 120°C to 130°C under a reduced pressure of 0.095 MPa.

After dehydration, 13 parts by mass of 2,2-dimethylolpropionic acid, 21 parts by mass of 1,4-cyclohexanedimethanol, and 114 parts by mass of methyl ethyl ketone were added under cooling to 50°C, and then sufficiently stirred and mixed. After stirring and mixing, 42 parts by mass of dicylcohexylmethane diisocyanate, 35 parts by mass of isophorone diisocyanate, and 0.03 parts by mass of stannous octylate were added to the mixture, and then subjected to reaction at 75°C to produce an organic solvent solution of a urethane prepolymer having an isocyanate group at a molecular end.

Next, 59 parts by mass of methyl ethyl ketone was added to the organic solvent solution of the urethane prepolymer, and the resultant mixture was cooled to 50°C, and carboxyl groups of the urethane prepolymer were neutralized by adding 10 parts by mass of triethylamine. Further, 422 parts by mass of water was added to the mixture and sufficiently agitated to produce an aqueous dispersion of a urethane resin having anionic groups formed by neutralizing the carboxyl groups.

Next, 5.2 parts by mass of a 25 mass% aqueous ethylenediamine solution was added to the aqueous dispersion, and the resultant mixture was sufficiently agitated and mixed to elongate the chain of the polyurethane resin. Next, 64 parts by mass of diacetone alcohol was added to the mixture, and then methyl ethyl ketone was distilled off by solvent removal, and if required, a nonvolatile content was adjusted with an aqueous medium to produce an aqueous resin composition (I'-3) having a nonvolatile content of 30% by mass and containing a urethane bond and a urea bond in a total of 3.0 mmol/g relative to the total amount of the urethane resin.

### [COMPARATIVE EXAMPLE 4] Preparation of aqueous resin composition (I'-4)

In a vessel purged with nitrogen and provided with a thermometer, a nitrogen gas inlet tube, and a stirrer, 100 parts by mass of polyester polyol (polyester polyol produced by reacting 1,6-hexanediol and neopentylglycol with adipic acid, hydroxyl equivalent: 1000 g/eq) was added and then dehydrated at 120°C to 130°C under a reduced pressure of 0.095 MPa.

After dehydration, 13 parts by mass of 2,2-dimethylolpropionic acid, 21 parts by mass of 1,4-cyclohexanedimethanol, 50 parts by mass of methyl ethyl ketone, and 64 parts by mass of diethylene glycol dimethyl ether were added under cooling to 50°C, and then sufficiently stirred and mixed. After stirring and mixing, 42 parts by mass of dicylcohexylmethane diisocyanate, 35 parts by mass of isophorone diisocyanate, and 0.03 parts by mass of stannous octylate were added to the mixture, and then subjected to reaction at 75°C to produce an organic solvent solution of a urethane prepolymer having an isocyanate group at a molecular end.

Next, 59 parts by mass of methyl ethyl ketone was added to the organic solvent solution of the urethane prepolymer, and the resultant mixture was cooled to 50°C, and carboxyl groups of the urethane prepolymer were neutralized by adding 10 parts by mass of triethylamine. Further, 422 parts by mass of water was added to the mixture and sufficiently agitated to produce an aqueous dispersion of a urethane resin having anionic groups formed by neutralizing the carboxyl groups.

Next, 5.2 parts by mass of a 25 mass% aqueous ethylenediamine solution was added to the aqueous dispersion, and the resultant mixture was sufficiently agitated and mixed to elongate the chain of the polyurethane resin. Next, methyl ethyl ketone was distilled off by solvent removal, and if required, a nonvolatile content was adjusted with an aqueous medium to produce an aqueous resin composition (I'-4) having a nonvolatile content of 30% by mass and containing a urethane bond and a urea bond in a total of 3.0 mmol/g relative to the total amount of the urethane resin.

### [Method of evaluating toxicity]

The film-forming aid contained in each of the aqueous resin compositions was confirmed as to whether or not it is described as a CMR substance (substance which is carcinogenic, mutagenic, or toxic for reproduction) in Table 3.1 of European Regulation No. 1272/2008 (CLP Regulation) Annex VI. The film-forming aid not described as a CMR substance was evaluated as "Good", and the film-forming aid described as a CMR substance was evaluated as "Poor".

### [Method of evaluating film-forming property]

Each of the aqueous resin compositions was applied on a substrate including a polypropylene film by using a bar coater so that the thickness of a dry coating film was 50 µm and then dried in an environment at a room temperature of 23°C and a humidity of 65% by a cast method. After drying for 24 hours, the film-forming property was evaluated by visual observation based on criteria below. When no crack occurred, the film-forming property was evaluated as "A", when fine cracks slightly occurred, the film-forming property was evaluated as "B", and when clear cracks occurred over the entire surface of the coating film, the film-forming property was evaluated as "C".

### [Method of evaluating alkali resistance]

Each of the aqueous resin compositions immediately after preparation was applied on a galvanized steel sheet by using a film applicator so that an amount of application was 0.1 g/100 cm² and then dried at 80°C for 30 seconds to form a test piece. Next, 0.5 mL of a 5% aqueous sodium hydroxyl solution was dropped on the test piece which was then allowed to stand for 30 minutes. After being allowed to stand, the appearance of a coating film in a portion where the liquid adhered was evaluated based on criteria below. When no change occurred in the appearance, alkali resistance was evaluated as "A"; when the coating film was discolored black or dissolved in an area of less than 10%, alkali resistance was evaluated as "by'; when the coating film was discolored black or dissolved in an area of 10% or more and less than 300, alkali resistance was evaluated as "C"; and when the coating film was discolored black or dissolved in an area of 30% or more, alkali resistance was evaluated as "D".

### [Method of measuring corrosion resistance]

Each of the aqueous resin compositions immediately after preparation was applied on a galvanized steel sheet by using a film applicator so that an amount of application was 0.1 g/100 cm² and then dried at 80°C for 30 seconds to form a test piece. According to a salt spray test method described in JIS Z2371, a 5 mass% aqueous sodium chloride solution was sprayed on the test piece at an ambient temperature of 35°C, and a rate of occurrence of white rust after 240 hours was measured and evaluated based on criteria below. In addition, a tape seal was attached to a portion where the aqueous resin composition was not applied (the end surfaces and back surface). When no white rust occurred, corrosion resistance was evaluated as "A"; when white rust occurred in an area of less than 5% of the whole coating area, corrosion resistance was evaluated as "B"; when white rust occurred in an area of 5% or more and less than 20% of the whole coating area, corrosion resistance was evaluated as "C"; and when white rust occurred in an area of 20% or more of the whole coating area, corrosion resistance was evaluated as "D".

**[Table 1]**

| Table 1 | Example 1 | Example 2 | Example 3 | Example 4 | Example 5 |
|---|---|---|---|---|---|
| 1,3-Butanediol (A1) | 1,3-Butanediol | 1,3-Butanediol | 1,3-Butanediol | 1,3-Butanediol | 1,3-Butanediol |
| Diol (A2) | 1,2-Propanediol | 1,2-Propanediol | 1,2-Butanediol | 1,2-Propanediol | 1,2-Propanediol |
| [Diol (A2)/1,3-butanediol (A1)] | 1.0 | 1.0 | 1.0 | 0.33 | 2.0 |
| Amount of film-forming aid (% by mass) | 9.0 | 2.1 | 9.0 | 12.0 | 13.5 |
| [Film-forming aid/aqueous medium] | 0.15 | 0.03 | 0.15 | 0.21 | 0.24 |
| Toxicity of film-forming aid | Good | Good | Good | Good | Good |
| Film-forming property | A | A | A | A | A |
| Alkali resistance | A | A | A | A | B |
| Corrosion resistance | A | A | B | B | B |

**[Table 2]**

| Table 2 | Example 6 | Example 7 | Example 8 | Example 9 | Example 10 |
|---|---|---|---|---|---|
| 1,3-butanediol (A1) | 1,3-Butanediol | 1,3-Butanediol | 1,3-Butanediol | 1,3-Butanediol | 1,3-Butanediol |
| Diol (A2) | - | 1,2-Propanediol | 1,2-Propanediol | 1,3-Propanediol | 1,2-Propanediol |
| [Diol (A2)/1,3-butanediol (A1)] | 0 | 6.7 | 1.7 | 1.0 | 1.0 |
| Amount of film-forming aid (% by mass) | 9.0 | 6.9 | 24.0 | 3.0 | 6.0 |
| [Film-forming aid/aqueous medium] | 0.15 | 0.11 | 0.52 | 0.04 | 0.09 |
| Toxicity of film-forming aid | Good | Good | Good | Good | Good |
| Film-forming property | A | A | A | A | A |
| Alkali resistance | B | B | B | B | A |
| Corrosion resistance | B | B | B | B | B |

**[Table 3]**

| Table 3 | Comparative Example 1 | Comparative Example 2 | Comparative Example 3 | Comparative Example 4 |
|---|---|---|---|---|
| Film-forming aid | N-methyl-2-pyrrolidone | Dipropylene glycol dimethyl ether | Diacetone alcohol | Diethylene glycol dimethyl ether |
| Amount of film-forming aid (% by mass) | 9.0 | 9.0 | 9.0 | 9.0 |
| [Film-forming aid/aqueous medium] | 0.15 | 0.15 | 0.15 | 0.15 |
| Toxicity of film-forming aid | Poor | Good | Good | Poor |
| Film-forming property | A | B | B | A |
| Alkali resistance | A | C | C | C |
| Corrosion resistance | A | D | D | C |

In Tables 1 to 3, "Amount of film-forming aid (% by mass" represents a mass ratio of the film-forming aid to the total amount of the aqueous resin composition.

In Tables 1 to 3, "Film-forming aid/aqueous medium" represents a mass ratio [film-forming aid/aqueous medium (C)] of the film-forming aid to the aqueous medium (C).

The aqueous resin compositions of Examples 1 and 2 have no toxicity and can impart the very excellent film-forming property to the aqueous resin compositions, and consequently, coating films with excellent alkali resistance and corrosion resistance can be formed. The aqueous resin composition of Example 3 is different from Examples 1 and 2 in composition of the film-forming aid, but has no toxicity and can impart the very excellent film-forming property to the aqueous resin composition, thereby forming a coating film with excellent alkali resistance and good corrosion resistance.

The aqueous resin compositions of Examples 4 and 5 are different from Example 1 in the amount of the film-forming aid combined, but have no toxicity and can impart the somewhat good film-forming property to the aqueous resin compositions, and consequently, coating films with good alkali resistance and corrosion resistance can be formed.

On the other hand, N-methyl-2-pyrrolidone used in Comparative Example 1 has the excellent film-forming property and can form a coating film with excellent alkali resistance and corrosion resistance, but has the problem of toxicity at a level which adversely affects human bodies and environments. Unlike N-methyl-2-pyrrolidone, the film-forming aids used in Comparative Examples 2 and 3 have no toxicity, but are unsatisfactory in the film-forming property, and consequently, a coating film with excellent alkali resistance and corrosion resistance cannot be formed. The film-forming aid used in Comparative Example 4 is excellent in film-forming property, but like N-methyl-2-pyrrolidone, it has high toxicity and the formed coating film is unsatisfactory in alkali resistance and corrosion resistance.

## Claims

1. A film-forming aid comprising at least one selected from the group consisting of 1,3-butanediol (A1) and 1,2-butanediol (a2-1).

2. The film-forming aid according to Claim 1, comprising 1,3-butanediol (A1) and at least one diol (A2) selected from the group consisting of 1,2-butanediol (a2-1), 1,3-propanediol (a2-2), and 1,2-propanediol (a2-3).

3. The film-forming aid according to Claim 2, wherein a mass ratio [the diol (A2)/the 1,3-butanediol (A1)] of the diol (A2) to the 1,3-butanediol (A1) is within a range of 0.1 to 3.

4. An aqueous resin composition comprising the film-forming aid according to any one of Claims 1 to 3, a resin (B), and an aqueous medium (C).

5. The aqueous resin composition according to Claim 4, wherein a content of the film-forming aid is within a range of 1% by mass to 30% by mass relative to the total amount of the aqueous resin composition, and a mass ratio [film-forming aid/aqueous medium (C)] of the film-forming aid to the aqueous medium (C) is within a range of 0.01 to 1.

6. The aqueous resin composition according to Claim 4, wherein the resin (B) is at least one selected from the group consisting of a urethane resin (b1) and a composite resin (b2) composed of a urethane resin and a vinyl resin.

7. The aqueous resin composition according to Claim 6, wherein the urethane resin (b1) contains a urethane bond and a urea bond in a total within a range of 1.2 mmol/g to 5 mmol/g relative to the total amount of the urethane resin (b1).

8. The aqueous resin composition according to Claim 6, wherein the composite resin (b2) contains a urethane bond and a urea bond in a total within a range of 1.2 mmol/g to 5 mmol/g relative to the total amount of the urethane resin constituting the composite resin (b2).

9. A steel sheet surface treatment agent comprising the aqueous resin composition according to any one of Claims 1 to 8.
